(19) Europäisches Patentamt
European Patent Office
Office européen des brevets

(11) Veröffentlichungsnummer : **0 096 751**
**B1**

(12) **EUROPÄISCHE PATENTSCHRIFT**

(45) Veröffentlichungstag der Patentschrift :
**11.12.85**

(21) Anmeldenummer : **83104637.0**

(22) Anmeldetag : **11.05.83**

(51) Int. Cl.⁴ : **H 01 F 7/16, F 16 K 31/42, F 15 B 13/043**

(54) Elektropneumatische Vorsteuerstufe für ein pneumatisches Servoventil.

(30) Priorität : **11.06.82 DE 3221928**

(43) Veröffentlichungstag der Anmeldung :
**28.12.83 Patentblatt 83/52**

(45) Bekanntmachung des Hinweises auf die Patenterteilung : **11.12.85 Patentblatt 85/50**

(84) Benannte Vertragsstaaten :
**CH DE FR GB IT LI SE**

(56) Entgegenhaltungen :
DE-A- 1 489 983
DE-A- 1 937 545
DE-A- 2 936 425
DE-A- 3 041 339
FR-A- 2 244 243
GB-A- 1 125 102

(73) Patentinhaber : **Kienzle Apparate GmbH**
**Heinrich-Hertz-Strasse**
**D-7730 Villingen-Schwenningen (DE)**

(72) Erfinder : **Goedecke, Wolf D., Dr.**
**Bachweg 12**
**D-7731 Unterkirnach (DE)**
Erfinder : **Schwenzer, Reinhard, Dipl. Ing.**
**Jülicher Strasse 25**
**D-5100 Aachen (DE)**
Erfinder : **Schnekenburger Gerhard**
**Hochstrasse 6**
**D-7713 Hüfingen (DE)**

EP 0 096 751 B1

**Beschreibung**

Die Erfindung bezieht sich auf eine elektropneumatische Vorsteuerstufe zur Steuerung eines pneumatischen Servoventils für pneumatische Antriebssysteme mit einem Düse-Prallplatte-System, dessen Prallplatte in Verbindung mit einer Tauchspule im Bereich eines Magnetfeldes aufgrund der Eingabe elektrischer Signale steuerbar ist.

Ein elektropneumatisches Servoventil ist eine Einrichtung zur Steuerung eines Luftstromes oder Luftdruckes durch eine pneumatische Ventilhauptstufe proportional zu einer Eingabe elektrischer Signale in eine so bezeichnete elektropneumatische Vorsteuerstufe. Einem elektrischen oder elektronischen Steuerungssystem ist der Vorzug zu geben schon deshalb, weil die Leistungsanforderungen in bezug auf eine flexible, dynamische Steuerfähigkeit besser beherrschbar und den mechanischen oder rein fluidischen Systemen in vielen Beziehungen überlegen sind. Das Ziel bei einer elektropneumatischen Vorsteuerstufe muß es sein, einem bestimmten elektrischen Eingangssignal an der Vorsteuerstufe einen eindeutig definierbaren, entsprechenden Druck bzw. einen Volumenstrom am Ausgang der Ventilhauptstufe bzw. des pneumatischen Servoventils zuzuordnen. Um schließlich von einem elektropneumatischen Umformer der bezeichneten Art einen hohen Verstärkungseffekt zu erhalten, hängt davon ab, mit einer möglichst kleinen elektrischen Leistung auf der Eingangsseite des Ventils in proportionaler Abhängigkeit einen möglichst hohen Volumenstrom oder die Wirkung großer Drücke steuerbar zu machen. Will man hierfür die Voraussetzungen schaffen, so sind alle Einflußgrößen in bezug auf die Bauteile und die Kombinationen von Steuerungselementen bei bekannten Ventilen dieser Art zu untersuchen und gegebenenfalls optimal aufeinander abzustimmen. Eine der Hauptkenndaten für einen optimalen Verstärkungseffekt liegt sicherlich in der elektrischen Leistungsaufnahme, die es unter Beibehaltung der pneumatischen Ventilleistung so weit zu reduzieren gilt, daß aufgrund einer verhältnismäßig minimalen elektrischen Leistungsaufnahme entsprechend ausgebildete Ventile auch im Bereich der vielerorts vorgeschriebenen Eigensicherheit oder als computergesteuerte Ventile einsetzbar sind.

Weiter für den Anwender grundsätzliche Einflußgrößen ergeben sich aus der baulichen Konzeption des elektropneumatischen Servoventils. Hier gilt es insbesondere auf Maßnahmen zu achten, die ohne Verzicht auf einen Teil der Ventilleistung zu einer Miniaturisierung der Baugruppen und hier insbesondere der elektropneumatischen Vorsteuerstufe führen. Eine erste Forderung besteht in der Anwendung von konstruktiven Maßnahmen zur Erzielung möglichst kleiner Baumaße, die einer besseren Integration derart ausgebildeter Servoventile, beispielsweise in Gehäuse pneumatischer Antriebssysteme, dienen. Von sehr großer Bedeutung sind ein geringes Gewicht des Gesamtventils und in diesem Zusammenhang vor allem auch geringe bewegte Massen in der Vorsteuerstufe, das sind Maßnahmen, die insgesamt gesehen zu einer wesentlichen Verbesserung der dynamischen Verhältnisse des Ventils beitragen. In bezug auf die Einflußgrößen nach vorstehender Darlegung lassen sich die elektrisch steuerbaren Ventile in zwei Bauarten unterteilen, wovon eine Bauart aufgrund der Funktionsweise als elektrisch direkt betätigbares Ventil, die zweite Bauart als elektrisch indirekt betätigbares Ventil zu bezeichnen ist. Beim elektrisch direkt betätigbaren Ventil wird die Stellkraft zur Betätigung des Ventilschließelementes direkt von einem Elektromagneten erzeugt. Das bedeutet, die maximal steuerbaren Durchlaßvolumina oder Drücke sind direkt abhängig von der seitens des Magneten verfügbaren Stellkraft. Um letztere aufzubringen, sind großvolumige Elektromagnete mit gleichermaßen großen Spulen erforderlich, die im Vergleich zur pneumatischen Ventilhauptstufe dieser in Baugröße und Gewicht bei bekannten Servoventilen nicht nachstehen. Schließlich bewegt sich die elektrische Leistungsaufnahme bei derartigen Bauformen von Servoventilen in einer Größenordnung, die von elektronischen Steuerungssystemen beispielsweise nur durch Zwischenschaltung von aufwendigen Verstärkungsschaltkreisen erreichbar ist. Servoventile, bei welchen die geometrischen Daten von Vorsteuerstufe und Ventilhauptstufe etwa gleich groß sind, eignen sich demnach nicht für eine Integration in pneumatische Antriebssysteme. Die großen, zu bewegenden Massen verhindern das für Stellantriebe gewünschte Maß an dynamischem Verhalten. Die Grenzfrequenz beispielsweise bleibt weit unter den Werten, wie sie im Anwendungsfall zur genauen und schnellen Regelung von Stellantrieben in der Handhabungstechnik gefordert sind. Die viel zu hohe elektrische Leistungsaufnahme, die durch Umwandlung eine beträchtliche Wärmeabstrahlung erzeugt, setzt Einsatzgrenzen, so daß entweder zusätzliche Kühlung oder verringerte Leistungsaufnahme zur Bedingung gemacht werden müssen. Aus der GB-A-1 125 102 und DE-A-2 936 425 sind Servoventile bekannt, bei denen der Elektromagnet vom Arbeitsmedium umspült und gekühlt wird.

Bei der genannten zweiten Bauart, als elektrisch indirekt betätigbares Ventil bezeichnet, handelt es sich insbesondere um eine elektropneumatische Vorsteuerstufe, bestehend aus einem sog. Pilotventil, das durch den Elektromagneten betätigt wird und durch Druckbeaufschlagung des Steuerkolbens das Hauptventil einstellt. Der Vorteil des elektrisch steuerbaren Pilotventils besteht darin, daß die steuerbaren Drücke bzw. Durchlaßvolumina von der Stellkraft des Magneten unabhängig sind. Die notwendige elektrische Leistungsaufnahme wird hierbei nur durch das Pilotventil bzw. der Spule, die letzteres einstellt, bestimmt. Obgleich die Lösung mit dem Pilotventil eine etwas aufwendigere Konzeption darstellt, bereitet sie den Weg zur Lösung der weitgehend vorrangigen Probleme im Hinblick auf eine Miniaturisierung und Verbesserung des dynamischen Verhaltens. Eine erste, noch zu überwindende Schwierigkeit besteht in der Auslegung einer geeigneten Tauchspule. Letztere wird bei einer Vorsteuerstufe der eingangs bezeichneten Art begrenzt einerseits durch die notwendige Kraft der Auslenkung einer Membranfeder und andererseits durch die zulässige Stromdichte in der Tauchspule. Da die Ventilleistung wenigstens unverändert beibehalten werden soll und damit keine Verringerung der Auslenkkraft zugelassen werden kann, ist eine allgemeine Leistungsverbesserung nur noch denkbar durch erhöhte Stromdichte bei einer entsprechend verbesserten Wärmeabfuhr. Diese Überlegung kommt auch der Forderung nach einer geometrisch kleinen Bauweise entgegen und läßt sich insbesondere bei indirekt durch eine elektropneumatische Vorsteuerstufe der eingangs bezeichneten Art steuerbaren Ventilen einführen.

Demnach besteht die Aufgabe der Erfindung in der Schaffung einer einfachen, kleinen, elektropneumatischen Vorsteuerstufe zur Steuerung eines pneumatischen Servoventils, die sich durch möglichst kleine Abmessungen bei geringer Leistungsaufnahme und durch ein optimales, dynamisches Verhalten für eine Integration in pneumatische Antriebe eignet.

Die Lösung der Aufgabe zur Schaffung einer elektropneumatischen Vorsteuerstufe mit einem Düse-Prallplatte-System zur Steuerung eines pneumatischen Servoventils ist dadurch gekennzeichnet, daß in einer Membranfederscheibe als Trägerelement einer Tauchspule sowie im stirnseitigen Flansch des Spulenkörpers in Achsrichtung zur Anordnung der Spule und konzentrisch um eine zentrale Prallplattenfläche Durchbrüche angeordnet sind, und daß im Bereich eines zylindrischen Hohlraums, der gebildet wird durch einen peripheren, ringförmigen Magneten und einen zentral eintauchenden Ankerzapfen eines T-förmigen Ankers stirnseitig des Ankers nach außen führende Abluftkanäle vorgesehen sind, dergestalt daß ein aus einer Meßdüse in die Vorsteuerstufe ausströmender Luftstrom durch den magnetischen Luftspalt hindurch an den zylindrischen Außen- und Innenflächen der Spule vorbeigeleitet ist, so daß durch das eigene Arbeitsmedium des Servoventils eine permanente Kühlung der Spule erfolgt.

Weitere Merkmale zur Ausgestaltung der Erfindung sind in den Unteransprüchen enthalten.

In vorteilhafter Weise wird mit der im Patentanspruch angegebenen Maßnahme erreicht, daß durch den aus der Meßdüse permanent ausströmenden Luftstrom eine beträchtlich verbesserte Wärmeabfuhr gewährleistet ist, durch welche die Stromdichte wesentlich erhöht werden kann. Durch eine entsprechend verteilte Anordnung der Durchbrüche in der Membranfederscheibe und gegebenenfalls dem Flansch des Spulenkörpers wird der permanent wirksame Luftstrom zwangsläufig und gleichmäßig verteilt an den zylindrischen Außen- und Innenseiten der Tauchspule vorbeigeführt. Die durch Wärmeentzug an der Spule erwärmte Luft wird durch den zylindrischen Hohlraum zwischen dem ringförmigen Magneten und dem Ankerzapfen und weiter durch mehrere Abluftkanäle in der Stirnseite der Vorsteuerstufe in die Atmosphäre abgeführt. Aufgrund des konstruktiven Aufbaus der Vorsteuerstufe und der Maßnahmen zur Lenkung des Abluftstromes aus der Meßdüse gelingt es unter Ausnutzung des ventileigenen Arbeitsmediums einen sehr wirkungsvollen Kühleffekt im Bereich der Wärmeabstrahlzone in der Vorsteuerstufe zu erzielen. Ohne den Aufwand einer zusätzlichen künstlichen Kühlung erreicht man einerseits die unveränderte Ventilleistung über eine reduzierte Leistungsaufnahme. Die Stromdichte kann durch den wirksamen Wärmeentzug erhöht werden, das bedeutet, die Tauchspule kann bei gleicher Steuerleistung kleiner gebaut werden. Dieser Vorteil kommt nicht zuletzt einer verbesserten Dynamik zugute aufgrund der damit verkleinerten bewegten Massen der Tauchspule. Allgemein läßt sich durch die bezeichneten Maßnahmen die Vorsteuerstufe für das indirekt betätigte pneumatische Servoventil geometrisch um ein beträchtliches Maß kleiner bauen, und durch die auf diese Art erreichte Miniaturisierung sind zusätzlich gute Voraussetzungen geschaffen für die Integration des bezeichneten Servoventils in pneumatische Antriebe.

Ein Ausführungsbeispiel des Gegenstandes der Erfindung ist nachstehend beschrieben und anhand der Zeichnungen gezeigt.

Es zeigt

Figur 1 ein Schnittbild eines indirekt betätigten Servoventils, bestehend aus einer elektropneumatischen Vorsteuerstufe und einer Ventilhauptstufe,

Figur 2 eine elektropneumatische Vorsteuerstufe im Schnitt, bei der eine Membranfederscheibe als Prallplatte dient und gleichzeitig mit Durchbrüchen versehen ist zur Ableitung der Steuerluft zur Kühlung der Tauchspule,

Figur 3 eine Membranfederscheibe mit konzentrisch zur Lage der Tauchspule angeordneten Durchbrüchen zur Verteilung und Lenkung des Luftstromes aus der Meßdüse in den Wärmeabstrahlbereich der Tauchspule.

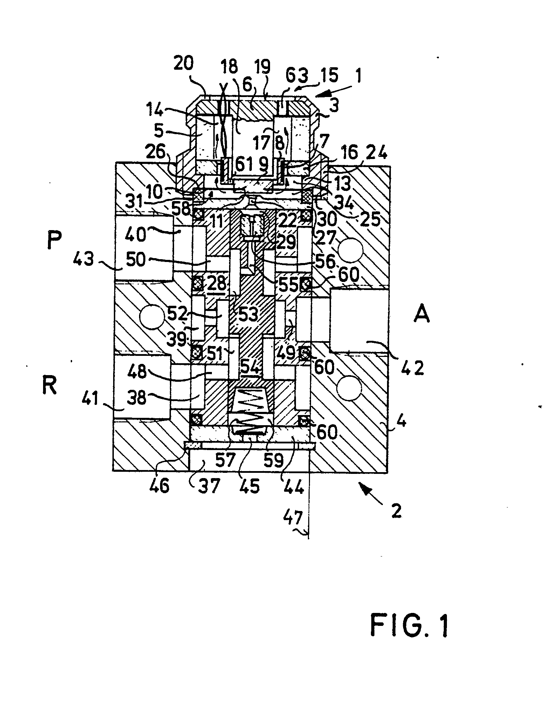

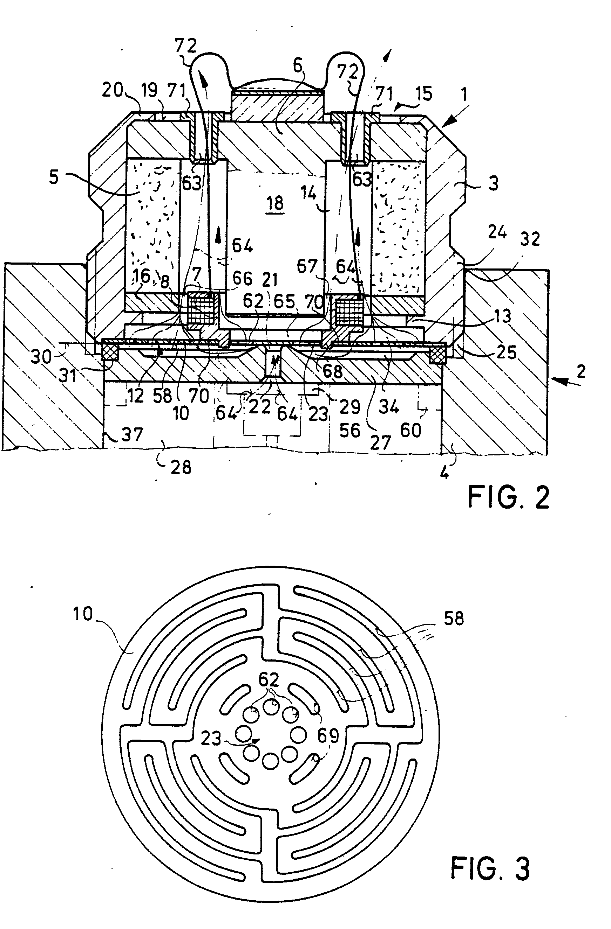

Eine Ausführungsform des elektropneumatischen Servoventils gemäß der vorbeschriebenen Art besteht aus einer Vorsteuerstufe 1 und einer Ventilhauptstufe 2, wobei die Einrichtungen der Vorsteuerstufe 1 in einem Gehäuse 3 und die Einrichtungen der Ventilhauptstufe 2 in einem separaten Gehäuse 4 untergebracht sind. Als Einrichtungen der Vorsteuerstufe 1 sind in dem Gehäuse 3 ein Permanentmagnet 5, ein Anker 6, eine Tauchspule 7 mit einem besonders ausgebildeten Spulenkörper 8 mit einer integrierten Prallplatte 9 untergebracht (Fig. 1). Der Spulenkörper 8 mit der Prallplatte 9 wird durch eine Membranfederscheibe 10 getragen, indem die Prallplatte 9 in eine entsprechende Bohrung 11 in der Membranfederscheibe 10 beispielsweise durch einen Preßsitz oder auf formschlüssige Art sich selbsthaltend aufgesteckt ist. Gemäß dem Aufbau der Vorsteuerstufe 1 nach Fig. 1 und 2 ist im zylindrischen Hohlraum 14 der Vorsteuerstufe 1 nahe der der Ventilhauptstufe 2 zugewandten Stirnseite 12 ein nach innen vorstehender Bund 13 vorgesehen. Dieser Bund 13 dient zur Auflage eines von der zunächst offenen Stirnseite 15 in den zylindrischen Hohlraum 14 eingelegten, ringförmigen Polschuhs 16. Als nächstes Teil wird in den Hohlraum 14 ein gleichfalls ringförmiger Permanentmagnet 5 und schließlich ein im Schnittbild T-förmig dargestellter Anker 6 eingelegt, dessen Ankerzapfen 18 in der Einbaulage etwa mit der Unterkante des Polschuhs 16 abschließt. Ein über die nach außen gerichtete Ankerstirnfläche 19 vorstehender Rand 20 des Gehäuses 3 wird nach innen umgebördelt und hält somit die in das Gehäuse 3 eingelegten Teile in einer unveränderbar definierten Lage zu den sonst durch die Bauform der Vorsteuerstufe 1 bestimmten weiteren Funktionsebenen. Eine dieser vorerwähnten Funktionsebenen wird gebildet durch die Positionierung einer mit einer Austrittsöffnung 21 einer Steuerluft-Meßdüse 22 zusammenwirkenden Fläche 23 einer Prallplatte 9. Die Prallplatte 9 in einer gemäß Fig. 1 dargestellten Ausbildungsform ist Teil eines einstückig ausgebildeten Spulenkörpers 8 und ist, wie bereits erwähnt, in der zentralen Bohrung 11 der scheibenförmigen Membranfederscheibe 10 aufgenommen. Die Membranfederscheibe 10 wird in einem Einstich 26 in der Innenwand des Gehäuses 3 gehalten. Damit ist die stromlose Ausgangslage der Tauchspule 7 im Luftspalt 17 des Magnetfeldes zwischen Polschuh 16 und Ankerzapfen 18 bestimmt und gleichzeitig die Position der wirksamen Fläche 23 der Prallplatte 9 bezogen auf das Gehäuse 3 definiert. Für eine stufenlose Feineinstellung der Lage der Vorsteuerstufe 1 zur Ventilhauptstufe 2 und gleichzeitig als Befestigungsmittel zur Verbindung mit der Ventilhauptstufe 2 ist an einem bundförmig erweiterten Teil der Gehäuseaußenwand der Vorsteuerstufe 1 ein Feingewinde 24 vorgesehen, mittels welchem sich die komplette Vorsteuerstufe 1 in eine auf der einen Stirnseite im Gehäuse 4 der Ventilhauptstufe 2 angeordnete Feingewindebohrung 25 einschrauben läßt. Aufgrund der Eigenschaft einer kleinen Steigung der Gewindegänge bei einem Feingewinde läßt sich die Vorsteuerstufe 1 und hier insbesondere die in fester Verbindung zu dem Gehäuse 3 positionierte Membranfederscheibe 10 mit der Prallplatte 9 über einen relativ großen Verdrehweg mit entsprechend großer Genauigkeit an die Austrittsöffnung 21 der Meßdüse 22 heranführen. Die Meßdüse 22 ist in einer austauschbaren Düsenscheibe 27 vorgesehen, welche in das Gehäuse 4 in Auflage auf eine zylindrische Steuerbuchse 28 einlegbar ist. Um sicherzustellen, daß die Druckluft aus einem Steuerluftraum 29 ausschließlich über die Meßdüse 22 austritt, ist bei einer Ausführungsform gemäß Fig. 1 und 2 zwischen Düsenscheibe 27 und Gehäuseunterkante 30 der Vorsteuerstufe 1 als flexible Zwischenlage ein elastomeres Dichtelement 31 vorgesehen, welches bei absoluter Dichtwirkung eine Einstellbarkeit der Position der Prallplatte 9 in der Vorsteuerstufe 1 zur Meßdüse 22 in der Ventilhauptstufe 2 im Bereich eines wählbaren Arbeitspunktes gewährleistet. Aufgrund der mittels Feingewinde 24, 25 erzielbaren Justierbarkeit der gegenseitigen Positionen zwischen Prallplatte 9 und Meßdüse 22 ist an sich die Einbauposition der Düsenscheibe 27 im Gehäuse 4 der Ventilhauptstufe 2 in ausreichenden grenzen lageunempfindlich. Eine genaue Einstellung des Arbeitspunktes im Einzelfall erfolgt durch feinfühliges Einschrauben der Vorsteuerstufe 1 in das Gehäuse 4 der Ventilhauptstufe 2. Um den Zustand einer optimalen Arbeitspunkteinstellung zu sichern und gleichzeitige als Beitrag zur Abdichtung der Gewindeverbindung 24, 25 zwischen den Gehäusen 3 und 4 ist in den Gewindegang des Feingewindes 24, 25 ein nachhärtendes Schraubensicherungsmittel 32 eingegeben. Eine derart stoffschlüssige Schraubensicherung läßt sich erforderlichenfalls lösen, so daß eine Nachjustierung der Einstellung des Arbeitspunktes zwischen der Vorsteuerstufe 1 und der Ventilhauptstufe 2 möglich ist oder ein Austausch der Vorsteuerstufe 1 vorgenommen werden kann.

Die im montierten Zustand zwischen der Vorsteuerstufe 1 und der Düsenscheibe 27 der Ventilhauptstufe 2 peripher eingespannte Membranfederscheibe 10 als Trägerelement einer Tauchspule 7 weist in der federnden Zwischenzone Durchbrüche 58 auf, die zum einen der Gestaltung von Federarmen, zum anderen der verteilten Führung eines Luftstromes 64 aus der Meßdüse 22 durch den magnetischen Luftspalt 66, 67 hindurch an den zylindrischen Außen- und Innenflächen der Tauchspule 7 vorbei dienen. Um eine Wärmeableitung an der Innenseite der Tauchspule 7 zu erwirken, sind beim Spulenkörper 8 nach Fig. 1 im stirnseitigen Flansch 65 weitere Durchbrüche 61 vorgesehen, die den Luftstrom 64 durch den Spulenkern führen. In einer anderen Ausbildungsform einer Vorsteuerstufe 1 nach Fig. 2 und 3, in welcher die Membranfederscheibe 12 gleichzeitig als Prallplatte 9 ausgebildet ist, sind konzentrisch um eine Prallplattenfläche 23 der Membranfederscheibe 10 Durchbrüche 62 vorgesehen, über welche ein Teil des aus der Meßdüse 22 ausströmenden Luftstromes 64 durch einen offen gelassenen Flansch 65 und weiter durch den inneren Luftspalt 67 zwischen dem Spulenkörper 8 und dem Ankerzapfen 18 hindurchgeleitet wird. Zur Befestigung des Spulenkörpers 8 sind an letzterem axial vorstehende Noppen 68 vorgesehen, mittels welchen der Spulenkörper 8 in entsprechend angeordnete Schlitze 69 in der Membranfederscheibe 10 aufsteckbar ist. Um den durch Wärmeentzug an der Tauchspule 7 angewärmten Luftstrom 64 möglichst ungehindert in die Atmosphäre abzuführen, sind im Bereich eines zylindrischen Hohlraumes 14, der gebildet wird durch einen peripheren, ringförmigen Magneten 5 und einen zentral eintauchenden Ankerzapfen 18 eines T-förmigen Ankers 6, stirnseitig des Ankers 6 nach außen führende Abluftkanäle 63 vorgesehen. Ein aus einer Meßdüse 22 während des Steuervorganges ständig in einen Luftraum 34 der Vorsteuerstufe 1 ausströmender Luftstrom 64 gelangt praktisch widerstandslos durch die Durchbrüche 58, 61, 62 in die obere Hälfte des Luftraumes 34, von wo der Luftstrom 64 durch den magnetischen Luftspalt 66, 67 hindurch an den zylindrischen Außen- und Innenflächen der Tauchspule 7 vorbeigeleitet wird. Mit dieser Anordnung ist durch das eigene Arbeitsmedium des Servoventils ein homogener Wärmeentzug aus dem Bereich der Tauchspule 7 erzielbar. Ohne einen besonderen Aufwand hat dies zur Folge, daß die Tauchspule 7 mit einer erhöhten Stromdichte belastbar ist. Durch diese Anordnung einer druckluftgekühlten Tauchspule 7 wird darüber hinaus erreicht, daß letztere ohne eine Verringerung der Auslenkkraft hinnehmen zu müssen, hinsichtlich Bauvolumen und Gewicht kleiner gebaut werden kann und wegen der damit erzielbaren geringeren Masse damit ein weit verbessertes, dynamisches Verhalten der Vorsteuerstufe 1 erreichbar ist. Die Abluftkanäle 63 sind im Durchlaßquerschnitt so dimensioniert, daß sie auch bei maximalem Abluftstrom keine rückwirkende Drosselung des Steuer-Luftstromes 64 darstellen. In die Abluftkanäle 63 sind Schutzhülsen 71 beispielsweise aus einem Isolationsmaterial, eingesetzt, durch welche zusätzlich zur Ableitung der Ablauft gleichzeitig die Anschlußleitungen 72 an die Tauchspule 7 frei beweglich geführt sind.

Die vorbeschriebene Vorsteuerstufe 1 gilt als Teil eines indirekt steuerbaren, pneumatischen Servoventils, dessen pneumatische Ventilhauptstufe 2 sich wie folgt zusammensetzt :

In dem Gehäuse 4 der Ventilhauptstufe 1 ist eine zylindrische Bohrung 37 vorgesehen, in die die Steuerbuchse 28 eingesetzt ist. Die Steuerbuchse 28 weist Außenringnuten 38, 39, 40 auf, die in Einbaulage mit Bohrungen 41, 42, 43 für die Anbringung von Anschlußleitungen in Verbindung stehen. Die Lage der Steuerbuchse 28 in der Bohrung 37 ist gesichert einerseits durch die Auflage auf einem Verschlußstück 44 mit einer zentralen Entlüftungsbohrung 45, welches durch einen Springring 46 in einer Nut 47 der zylindrischen Bohrung 37 im Gehäuse 4 axial gesichert ist. Auf der anderen, der Vorsteuerstufe 1 zugewandten Seite ist die Steuerbuchse 28 gesichert durch Anlage an die Düsenscheibe 27, die über das Dichtelement 31 durch die einwärts geschraubte Vorsteuerstufe 1 gegen die Steuerbuchse 28 gepreßt wird. Die Außenringnuten 38, 39, 40 in der Steuerbuchse 28 kommunizieren über radial angelegte Bohrungen 48, 49, 50 mit Ringnuten 51, 53 in einem Steuerkolben 54 und einer Innenringnut 52 in der Steuerbuchse 28. Der Steuerkolben 54 ist axial beweglich in einer Zylinderbohrung 59 der Steuerbuchse 28 gelagert.

Die Steuerbuchse 28 selbst ist mittels Dichtringen 60 gegen das Gehäuse 4 abgedichtet. In der Funktion als Stromsteuerventil beispielsweise dient die Bohrung 43 (P) für den Anschluß einer Primärdruckluftleitung. An die Bohrung 42 (A) wird die Sekundärdruckleitung oder Arbeitsdruckleitung angeschlossen, die Bohrung 41 (R) schließlich dient dem Anschluß der Abluft- oder Rückflußleitung. Für die Zuleitung von Steuerluft kommuniziert die ständig unter Primärdruckeinfluß stehende Ringnut 53 über einen Steuerluftkanal 55, der als zentrale Bohrung im Steuerkolben 54 angelegt ist, weiter über eine Steuerluftstromdrossel 56 mit dem Steuerluftraum 29 an dem der Vorsteuerstufe 1 zugewandten Ende des Steuerkolbens 54. Der Schubkraftwirkung auf den Steuerkolben 54 aufgrund eines variabel steuerbaren Druckes im Steuerluftraum 29 wirkt eine Druckfeder 57 entgegen, die sich auf dem Verschlußstück 44 abstützt. Zur Justierung der Druckfederkraft kann auch unter Beibehaltung einer Entlüftungsbohrung 45 eine von außen einstellbare, nicht näher angezeigte Verstellschraube vorgesehen sein.

In der Eigenschaft als Stromsteuerventil wird die Funktionsweise des beschriebenen Ausführungsbeispieles eines elektropneumatischen Servoventils nach der Darstellung gemäß Fig. 1 wie folgt erklärt : An die Bohrung 43 (P) ist beispielsweise die Anschlußleitung für den Primärdruck angelegt. Das durch Überdruck gekennzeichnete Medium Luft oder ein anderes Gas kann aufgrund der nach Fig. 1 dargestellten Position des Steuerkolbens 54 in der oberen Extremlage nicht als Arbeitsluftstrom am Verbraucheranschluß bei A wirksam werden, da in besagter Position zwischen der Ringnut 53, die an sich ständig mit dem Versorgungsluftstromanschluß an der Bohrung 43 kommuniziert, und dem Verbraucheranschluß in A keine durchgängige Verbindung besteht. In der oberen Extremlage des Steuerkolbens 54 dagegen ist aufgrund der überlappend positionierten Ringnut 51 des Steuerkolbens 54 mit der innenringnut 52 in der Steuerbuchse 28 die Ventilhauptstufe 2 auf einen maximalen Querschnitt des Verbraucheranschlusses bei A in Rückstromrichtung zum Anschluß R eingestellt. Diese Einstellung bleibt bei dem dargestellten Ausführungsbeispiel allgemein erhalten, solange nicht durch Anlegen von Versorgungsdruckluft die Voraussetzungen für eine Änderung der durch die Druckfeder 57 eingestellten Position des Steuerkolbens 54 gegeben sind. Eine Änderung der Position des Steuerkolbens 54 ist dann erreichbar, wenn dafür gesorgt ist, daß sich der Druck im Steuerluftraum 29 oberhalb des Steuerkolbens 54 so weit aufbaut, daß dieser als Stellkraft die Rückstellkraft der Druckfeder 57 überwindet und den Steuerkolben 54 gemäß fig. 1 entsprechend nach unten verschiebt. Eine hierzu erforderliche Überleitung des Primärluftdruckes im Versorgungsanschluß bei P in den Steuerluftraum 29 erfolgt über eine ständige Verbindung der Bohrung 43 über die Außenringnut 40 und radiale Bohrungen 50 in der Steuerbuchse 28 mit der Ringnut 53, die ihrerseits über den Steuerluftkanal 55 und die Steuerluftstromdrossel 56 mit dem Steuerluftraum 29 in Verbindung steht. Will man einen am Verbraucheranschluß in A steuerbaren Luftstrom einstellen, so geschieht dies durch eine entsprechende Positionierung des Steuerkolbens 54. Aufgrund von elektrischen Eingangsstromsignalen erfolgt eine stromproportionale Ansteuerung der Tauchspule 7. Entsprechend der Bewegung der Tauchspule 7 wird die Prallplatte 9 beispielsweise gegen die Meßdüse 22 geführt, begrenzt oder vermindert dadurch das Ausströmen von Steuerluft aus dem Steuerluftraum 29 und erzeugt so im Steuerluftraum 29 einen auf die Stirnfläche des Steuerkolbens 54 wirksamen Steuerdruck von beispielsweise 1,5 bis 6 b. Der Steuerkolben 54 wird aufgrund dieses variabel einstellbaren Druckes entgegen der Druckfeder 57 ausgelenkt, derart daß nach Erreichen einer bestimmten Steuerkolbenposition mit zunehmendem Steuerdruck eine im Querschnitt gleichfalls zunehmend einstellbare Überlappung der unter Versorgungsdruck stehenden Ringnut 53 mit der Innenringnut 52 und damit mit dem Verbraucheranschluß bei A stattfindet. Vor einer wirksamen Verbindung des unter Primärdruck stehenden Versorgungsanschlusses in P mit dem Verbraucheranschluß in A wird die davor auf maximalen Durchlaßquerschnitt eingestellte Verbindung zwischen dem Verbraucheranschluß bei A und dem Rückflußanschluß in R geschlossen. Wird der Signalstrom zur Ansteuerung der Tauchspule 7 zurückgenommen, so kehren sich die Verhältnisse entsprechend um ; d. h. der Arbeitsluftstrom am Verbraucheranschluß A wird dann entsprechend gedrosselt und in der Fortsetzung die Verbindung von P nach A schließlich geschlossen. Danach wiederum findet ein Wechsel in der Verbindung des Verbraucheranschlusses A auf den Abluft- oder Rückstromanschluß in R statt.

Wesentliche Merkmale für den Aufbau und die Wirkungsweise des elektropneumatischen Servoventiles der angezeigten Art sind darin zu sehen, daß es sich bei der gezeigten Einrichtung um eine zweistufige, indirekte Ventilsteuerung handelt, die aus einer elektropneumatischen Signalumformer- oder Vorsteuerstufe 1 und einer durch letztere lastunabhängig einstellbaren Ventilhauptstufe 2 besteht. Mit der Vorsteuerstufe 1 als Servogerät ist es möglich, mit kleinen elektrischen Steuerströmen bis ca. 200 mA indirekt den Volumenstrom einer Ventilhauptstufe 2 in einer Größenordnung von beispielsweise 500 l/min. zu steuern. Ein ganz besonderer Vorteil dabei ist es, daß zwischen dem elektrischen Signalstrom in der Tauchspule 7 und dem Volumenstrom am Verbraucherausgang in A ein proportionaler Zusammenhang besteht. Außerdem sind die aufgrund der in der Vorsteuerstufe 1 vorgesehenen Maßnahmen, wie Kühlung und daraus erzielbare Verkleinerung der Bauform, bewegten kleinen Massen des Servoventils eine Voraussetzung für eine schnelle Reaktionsweise.

Durch einen ständig wirksamen, homogenen Kühlluftstrom, der unmittelbar an den wärmeabstrahlenden Flächen der Tauchspule 7 vorbeigeführt ist, läßt sich durch den andauernden Wärmeentzug die Stromdichte in der Tauchspule 7 beträchtlich erhöhen. Dieser Effekt kann dahingehend ausgenutzt werden, daß bei einer Beibehaltung der Spulendimensionen die Dynamik, beispielsweise in bezug auf kurze Ansprechzeiten und hohe Ansprechempfindlichkeit wesentlich verbesserungsfähig ist. Der Wärmeentzug kann andererseits aber auch dahingehend nutzbar gemacht werden, daß die Tauchspulenabmessungen extrem kleingehalten und entsprechend geringe, bewegte Massen erzielt werden. Eine Anordnung der Abluftkanäle 63 oberhalb der Tauchspule 7 jedoch zur Ableitung des Luftstromes 64 nach der Seite kann jeweils nach der Erfordernis einer entsprechenden Einbaulage erfolgen, ohne daß sich damit an der Wirkungsweise der vorbeschriebenen Maßnahmen etwas ändert.

**Patentansprüche**

1. Elektropneumatische Vorsteuerstufe zur Steuerung eines pneumatischen Servoventils für pneumatische Antriebssysteme mit einem Düse-Prallplatte-System, dessen Prallplatte (9, 23) in Verbindung mit einer Tauchspule (7) im Bereich eines Magnetfeldes aufgrund der Eingabe elektrischer Signale steuerbar ist, dadurch gekennzeichnet, daß in einer Membranfederscheibe (10) als Trägerelement einer Tauchspule (7) sowie im stirnseitigen Flansch (65) des Spulenkörpers (8) in Achsrichtung zur Anordnung der Tauchspule (7) und konzentrisch um eine zentrale Prallplattenfläche (9, 23) Durchbrüche (58/61/62) angeordnet sind und daß im Bereich eines zylindrischen Hohlraums (14), der gebildet wird durch einen peripheren, ringförmigen Magneten (5) und einen zentral eintauchenden Ankerzapfen (18) eines T-förmigen Ankers (6), stirnseitig des Ankers (6) nach außen führende Abluftkanäle (63) vorgesehen sind, dergestalt daß ein aus einer Meßdüse (22) in die Vorsteuerstufe (1) ausströmender Luftstrom (64) durch den magnetischen Luftspalt (66, 67) hindurch an den zylindrischen Außen- und Innenflächen der Tauchspule (7) vorbeigeleitet ist, so daß durch das eigene Arbeitsmedium des Servoventils eine permanente Kühlung der Tauchspule (7) erfolgt.

2. Elektropneumatische Vorsteuerstufe nach Anspruch 1, dadurch gekennzeichnet, daß in die Abluftkanäle (63) Schutzhülsen (71) eingesetzt sind, durch welche zusätzlich zur Ableitung der Abluft gleichzeitig die Anschlußleitungen (72) an die Tauchspule (7) geführt sind.

3. Elektropneumatische Vorsteuerstufe nach Anspruch 1, dadurch gekennzeichnet, daß zur Führung des Luftstromes (64) durch den Spulenkern der Spulenkörper (8) ohne zentralen Flansch (65) ausgebildet und mittels axial angeordneter Noppen (68) in entsprechend angeordnete Schlitze in der Membranfederscheibe (10) aufsteckbar ist.

4. Elektropneumatische Vorsteuerstufe nach den Ansprüchen 1 und 3, dadurch gekennzeichnet, daß zur Verteilung des Luftstromes (64) im Sinne einer homogenen Wärmeabfuhr konzentrisch im Bereich zwischen der zentralen Prallplattenfläche (23) und der Ringfläche (70) des Spulenkörpers (8) in der Membranfederscheibe (10) eine Reihe Durchbrüche (62) vorgesehen ist, die aufgrund eines dadurch ableitbaren Luftstromes (64) der Wärmeabfuhr aus dem Spulenkern dienen.

## Claims

1. Electropneumatic precontrol stage for controlling the pneumatic servo valve for pneumatic driving systems with a jet-impact-plate-system the impact plate (9, 23) in connection with a plunging spool (7) being controllable within the range of a magnetic field due to the input of electrical signals, characterized in that in a diaphragm spring disk (10) as a supporting element of a plunging spool (7) as well as in the front facing flange (65) of the spool body (8) in axial direction to the arrangement of the plunging spool (7) and concentrically around a central impact plate surface (9, 23) there are cut-outs (58/61/62) and in that in the range of a cylindrical hollow space (14) which is formed by a peripheral ring-shaped magnet (5) and by a centrally plunging armature pivot (18) of a T-shaped armature (6) there are externally directed output channels (63) arranged in the front side of the armature (6) in such way that an air stream (64) deriving from a measuring jet (22) within the precontroll stage (1) passes through the magnetic air gap (66, 67) to the cylindrical external and internal surfaces of the plunging spool (7) so that working medium proper of the servovalve effects a permanent cooling of the plunging spool (7).

2. Electropneumatic precontrol stage according to Claim 1, characterized in that protective bushings (71) are inserted into the output channel (63) through which additionally to the output of the output air simultaneously the connecting lines (72) for the plunging spool (7) are directed.

3. Electropneumatic precontrol stage according to Claim 1, characterized in that for guiding the air stream (64) through the spool core the spool body (8) is made without a central flange (65) and may be press fitted by means of axially arranged projections (68) cooperating with correspondingly arranged slots in the diaphragm spring disk (10).

4. Electropneumatic precontrol stage according to the Claims 1 and 3, characterized in that for distributing the air stream (64) in order to achieve a homogeneous heat transfer concentrically in the range between the central impact plate surface (23) and the ring surface (70) of the spool body (8) a number of cut-outs (62) are arranged in the diaphragm spring disk (10) which due to the air stream (64) resulting therefrom serve as heat conveying means from the spool core.

## Revendications

1. Etage de commande pilote électropneumatique pour la commande d'une servo-soupape pneumatique pour des systèmes d'entraînement pneumatiques avec un système à palette et à gicleur dont la palette (9, 23) en combinaison avec une bobine mobile (7) peut être commandée dans la zone d'un champ magnétique en raison de l'entrée de signaux électriques, caractérisé par le fait, que dans un disque élastique de diaphragme (10) comme élément support de bobine mobile (7) ainsi que dans la bride frontale (65) du corps de bobine (8) sont disposés des ajours (58/61/62) dans le sens axial pour la disposition de la bobine mobile (7) et de façon concentrique autour d'une surface de palette centrale (9, 23), et que dans la zone d'une cavité cylindrique (14) qui est formée par un aimant annulaire périphérique (5) et un tenon (18) à plongée centrale d'une armature (6) en forme de T, sont prévus des canaux d'évacuation d'air (63) conduisant du côté frontal de l'armature (6) vers l'extérieur, de telle sorte qu'un courant d'air s'échappant d'une buse de mesure (22) dans l'étage de commande pilote (1) soit acheminé à travers l'entrefer magnétique (66, 67) le long des surfaces cylindriques extérieures et intérieures de la bobine mobile (7), de sorte que ladite bobine mobile (7) est refroidie en permanence par le propre fluide de travail de la servo-soupape.

2. Etage de commande pilote électropneumatique selon la revendication 1, caractérisé par le fait que dans les canaux d'évacuation d'air (63) sont insérées des douilles de protection (71) qui sont simultanément traversées, en plus de l'air d'évacuation, par les lignes de raccordement (72) de la bobine mobile (7).

3. Etage de commande pilote électropneumatique selon la revendication 1, caractérisé par le fait que pour le guidage du courant d'air (64) à travers le noyau de bobine, le corps de bobine (8) est réalisé sans bride centrale (65) et peut être enfiché, au moyen de boutons (68) disposés axialement, dans des fentes disposées en conséquence dans le disque élastique de diaphragme (10).

4. Etage de commande pilote électropneumatique selon l'une quelconque des revendications 1 et 3, caractérisé par le fait que pour la distribution des courants d'air (64) dans le sens d'une dissipation de chaleur homogène est prévue une série d'ajours (62), disposés de façon concentrique dans la région entre la surface de palette centrale (23) et la surface annulaire (70) du corps de bobine (8) dans le disque élastique de diaphragme (10), lesquels ajours servent, en raison d'un courant d'air (64) pouvant en être dérivé, à la dissipation de la chaleur provenant du noyau de bobine.

FIG. 1

1

FIG. 2

FIG. 3